(19) Europäisches Patentamt
European Patent Office
Office européen des brevets

(11) **EP 1 504 285 B1**

(12) **EUROPÄISCHE PATENTSCHRIFT**

(45) Veröffentlichungstag und Bekanntmachung des Hinweises auf die Patenterteilung:
**12.11.2008 Patentblatt 2008/46**

(21) Anmeldenummer: **03722234.6**

(22) Anmeldetag: **27.03.2003**

(51) Int Cl.:
*G01S 11/12* (2006.01)   *G01S 5/16* (2006.01)

(86) Internationale Anmeldenummer:
**PCT/DE2003/001017**

(87) Internationale Veröffentlichungsnummer:
**WO 2003/093864 (13.11.2003 Gazette 2003/46)**

(54) **VERFAHREN UND VORRICHTUNG ZUR SICHTWEITENMESSUNG MIT BILDSENSORSYSTEMEN**

METHOD AND DEVICE FOR VISUAL RANGE MEASUREMENTS WITH IMAGE SENSOR SYSTEMS

PROCEDE ET DISPOSITIF PERMETTANT DE MESURER LA DISTANCE DE VISIBILITE A L'AIDE DE SYSTEMES DE CAPTEURS D'IMAGES

(84) Benannte Vertragsstaaten:
**FR GB IT**

(30) Priorität: **03.05.2002 DE 10219788**

(43) Veröffentlichungstag der Anmeldung:
**09.02.2005 Patentblatt 2005/06**

(73) Patentinhaber: **ROBERT BOSCH GMBH**
**70442 Stuttgart (DE)**

(72) Erfinder: **FRANZ, Matthias**
**72074 Tuebingen (DE)**

(56) Entgegenhaltungen:
**EP-A- 0 687 594**     **WO-A-02/06851**
**WO-A-97/29926**      **DE-A- 19 928 915**
**JP-A- 63 188 741**

• **POMERLEAU D: "Visibility estimation from a moving vehicle using the RALPH vision system" INTELLIGENT TRANSPORTATION SYSTEM, 1997. ITSC '97., IEEE CONFERENCE ON BOSTON, MA, USA 9-12 NOV. 1997, NEW YORK, NY, USA,IEEE, US, 9. November 1997 (1997-11-09), Seiten 906-911, XP010270909 ISBN: 0-7803-4269-0**

## Beschreibung

Die Erfindung betrifft ein Verfahren und eine Vorrichtung zur Sichtweitenmessung mit Bildsensorsystemen, bestehend aus wenigstens zwei Bildsensoren.

Bei einem bekannten Verfahren emittiert ein Sender Strahlung und die zurückgestreuten Anteile werden durch einen Empfänger detektiert und zur Berechnung der Sichtweite verwendet. Mit diesem Verfahren werden keine Informationen über die Beleuchtungsverhältnisse der Szene und die Kontraste der Objekte erfasst. Die Wahrnehmung der Sichtweite durch den Menschen ist durch diese Parameter entscheidend mitbestimmt. Dieses Verfahren ist daher für Anwendungen, bei denen Informationen über die von einem Menschen wahrgenommene Sichtweite benötigt werden, wenig geeignet.

Es ist bekannt, dass über ein Verfahren mit einem Bildsensor durch Detektion eines Objektes, Bestimmung des Abstandes des Objektes zum Bildsensor an zwei unterschiedlichen Positionen des Objektes und Ermittlung des jeweiligen Kontrastes, die Sichtweite bestimmt werden kann (WO 02/06851 A1). Das Verfahren ist dadurch limitiert, dass zum einen die Objekte nicht in Bewegung sein dürfen und zum anderen der Bildsensor selbst in Bewegung sein muss. Weiterhin ist das Verfahren bei in Fahrtrichtung orientierten Bildsensoren, beispielsweise in Kraftfahrzeugen, ungeeignet, da kleine Objekte in großem Abstand detektiert und bis zur Annäherung an das Kraftfahrzeug verfolgt werden müssen. Dabei besteht das Problem, dass aus einer Vielzahl an kontrastarmen Objekten ein Objekt gewählt werden muss, ohne zu wissen, ob es sich hierbei um ein geeignetes und bei Annäherung großes und kontrastreiches Objekt handelt.

Ein weiteres Verfahren zur Bestimmung der Sichtweite ist in EP-687594 A1 beschrieben. Bei diesem Verfahren wird über das Verhältnis von weißen und schwarzen Bildpunkten das Vorhandensein von Nebel ermittelt. In kontrastarmen Szenen versagt dieses Verfahren, da es hier fälschlicherweise Nebel detektiert.

Die deutsche Offenlegungsschrift DE 199 28 915 A1 offenbart ein Verfahren zur Bestimmung der Sichtweite in dem vor einem Fahrzeug liegenden Blickfeld mit wenigstens einem Videosensor, wobei als Sichtweite die gemessene Entfernung eines Objektes angenommen wird, dessen gemessener Kontrast für das menschliche Auge noch hinreichend erkennbar ist. Aus der Veröffentlichung Pomerleau D: "Visibility estimation from a moving vehicle using the RALPH vision system" Intelligent Transportation System, 1997, ITSC '97., IEEE Conference on Boston, MA, USA, 9-12 Nov. 1997 geht ein Verfahren zur Schätzung der Sichtweite hervor. Aus der JP 631887741 ist ein Verfahren zur Sichtweitenbestimmung bekannt, wobei basierend auf dem Hell-Dunkel-Kontrast eines bekannten Messobjektes die Sichtweite bestimmt wird.

Vorteile der Erfindung

Das Verfahren der vorliegenden Erfindung erweitert den Funktionsumfang von Bildsensorsystemen, bestehend aus wenigstens zwei Bildsensoren, um die Ermittlung der Sichtweite. Besonders vorteilhaft ist dies in Kraftfahrzeugen, in denen Bildsensorsysteme, insbesondere mit zwei Bildsensoren, zur Unterstützung des Fahrers in Fahrerassistenzsystemen eingesetzt werden. Der Einbau einer zusätzlichen Vorrichtung in das Kraftfahrzeug zur Ermittlung der Sichtweite ist nicht mehr notwendig.

Vorteilhaft ist nicht nur die Anwendung der Sichtweitenmessung mit Bildsensorsystemen in Kraftfahrzeugen, sondern in allen Bildsensorkonfigurationen, bei denen wenigstens zwei Bildsensoren die gleiche Szene abbilden und bereits andere Funktionen erfüllen. Besonders vorteilhaft ist die Anwendung in Verbindung mit der Überwachung von Verkehrsflächen mit Hilfe von Bildsensorsystemen. Durch die Ermittlung der Sichtweite ist hier beispielsweise eine automatische Anpassung der Anzeige der erlaubten Höchstgeschwindigkeit an die Sichtverhältnisse möglich.

In vorteilhafter Weise ermöglicht das Verfahren die Messung der Sichtweite bei bewegten und unbewegten Bildsensorsystemen. In Kraftfahrzeugen ist damit die Ermittlung der Sichtweite in allen Bewegungszuständen möglich, insbesondere auch bei stehendem Fahrzeug.

Die Bestimmung der Sichtweite kann in vorteilhafter Weise bei statischen und bewegten Objekten erfolgen. Damit ist die Bestimmung der Sichtweite beim Einsatz dieser Erfindung in Kraftfahrzeugen bei beliebigen Bewegungszuständen der Objekte der Umgebung des Kraftfahrzeuges möglich.

In besonders vorteilhafter Weise berücksichtigt das hier beschriebene Verfahren zur Bestimmung der Sichtweite die Beleuchtung der Szene. Das Verfahren kann in allen Anwendungsfällen eingesetzt werden, bei denen einer der menschlichen Wahrnehmung entsprechende Größe der Sichtweite benötigt wird.

In vorteilhafter Weise wird in einer ersten Ausgestaltung des Verfahrens zufolge die Sichtweite über arithmetische Mittelwertbildung von wenigstens einer Einzelsichtweite berechnet, die aus den Durchschnittskontrasten von zwei unterschiedlichen Abstandsbereichen berechnet wird. Dieses Verfahren eignet sich in vorteilhafter Weise zur Berechnung der Sichtweite bei geringer Rechenleistung der verwendeten Auswerteeinheit.

Als vorteilhaft hat sich die Berechnung der Sichtweite durch Bildung einer exponentiellen Regression der Durchschnittskontraste über dem Abstand erwiesen.

Vorteilhaft ist die Vorverarbeitung der Bildsensorsignale. Beispielsweise kann in Situationen, in denen sich nur Objekte ähnlicher Größe im Sichtfeld der Bildsensoren befinden, die Abschwächung der kleinräumigen Kontraste weit entfernter Objekte durch die optischen Eigenschaften der Bildsensoren zu einer Unterschätzung der Sichtweite führen. Durch Vorverarbeitung der Bildsensorsignale, insbesondere durch eine Hochpaßfilterung, läßt sich dies verhindern. In vorteilhafter Weise kann durch die Vorverarbeitung der Bildsensorsignale eine Verbesserung der Bildqualität, wie die Beseitigung von Bildstörungen, erreicht werden.

In vorteilhafter Weise kann die aus den Bildsensorsignalen berechnete Sichtweite in nachfolgenden Systemen verwendet werden. In Fahrerassistenzsystemen in Kraftfahrzeugen ist beispielsweise eine optische, akustische und/ oder haptische Warnung des Fahrers bei Überschreitung einer aus den Sichtverhältnissen abgeleiteten maximalen Geschwindigkeit möglich.

Insbesondere ist die Einschaltung von Nebelscheinwerfern und/oder des Abblendlichtes in Kraftfahrzeugen bei Unterschreitung einer minimalen Sichtweite denkbar.

Weitere Vorteile ergeben sich aus der nachfolgenden Beschreibung von Ausführungsbeispielen mit Bezug auf die Figuren und aus den abhängigen Patentansprüchen.

Zeichnung

Die Erfindung wird nachstehend anhand der in der Zeichnung dargestellten Ausführungsform näher erläutert.

Es zeigen:

- Figur 1 ein Blockdiagramm der Vorrichtung zur Sichtweitenmessung,

- Figur 2 ein Ablaufdiagramm des Verfahrens zur Bestimmung der Sichtweite 28 aus den Bildsensorsignalen 21 und 22,

- Figur 3 den Durchschnittskontrast $\overline{C}(x)$ von Objekten als Funktion des Abstandes x, eine Regressionskurve 31 und die Breite eines Abstandsbereichs $\Delta$x.

Beschreibung von Ausführungsbeispielen

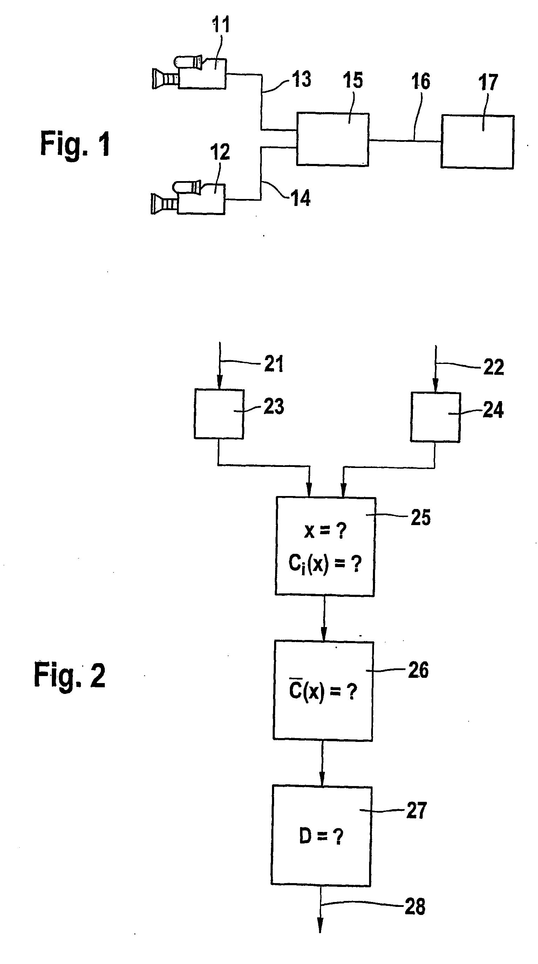

Figur 1 zeigt ein Blockdiagramm der Vorrichtung, bestehend aus einem Bildsensorsystem mit einem Bildsensor 11 und einem zweiten Bildsensor 12, zwei Bildsensorsignalleitungen 13 und 14, einer Auswerteeinheit 15, einer Ausgangssignalleitung 16 und einem nachfolgenden System 17.

Als Bildsensoren sind beispielsweise CCD- oder CMOS-Kameras einsetzbar. Beide Bildsensoren sind so angeordnet, dass sie dieselbe Szene abbilden, allerdings unter einem etwas unterschiedlichen Sichtwinkel. Die Bildsensoren übermitteln Bilder der beobachteten Szene an die Auswerteeinheit 15. Die Auswerteeinheit 15 erzeugt auf der Ausgangssignalleitung 16 ein Signal des Meßwertes der Sichtweite. Dieses Ausgangssignal wird elektrisch, digital, akustisch und/ oder visuell zur Anzeige, Information und/oder Speicherung an wenigstens ein nachfolgendes System 17 übertragen. Die Auswerteeinheit 15 besteht aus mehreren in Figur 2 dargestellten Modulen 23, 24, 25, 26 und 27, die im bevorzugten Ausführungsbeispiel als Programme wenigstens eines Mikroprozessors ausgestaltet sind.

Das Verfahren basiert auf einer statistischen Eigenschaft natürlicher Szenen, wonach die Wahrscheinlichkeit des Auftretens eines Objekttyps unabhängig von dessen Abstand vom Bildsensorsystem ist. Im Verfahren wird die Eigenschaft von Objekten i verwenden, dass deren Objektkontrast $c_i$, definiert als der bei Abstand 0 gemessene Kontrast, statistisch unabhängig von der Position des Objektes relativ zum Bildsensorsystem ist. Im statistischen Mittel beobachtet man dann in jedem Abstandsbereich x vom Bildsensorsystem über alle n Objekte, die sich in diesem Abstandsbereich befinden, den gleichen mittleren Objektkontrast $\overline{c}$ :

$$\overline{c} = \frac{1}{n}\sum_{i=1}^{n} c_i(x) = const. \tag{1}$$

Der mittlere Objektkontrast $\overline{c}$ ist also im statistischen Mittel unabhängig vom Abstand vom Bildsensorsystem. Der beobachtbare Kontrast $C_i(x)$ eines einzelnen Objektes i mit dem Objektkontrast $c_i$ fällt mit zunehmendem Abstand nach dem Lambertschen Gesetz abhängig von der Sichtweite D ab:

$$C_i(x) = c_i e^{-\frac{x}{D}} \tag{2}$$

Für den Durchschnittskontrast $\overline{C}(x)$ in einem bestimmten Abstandsbereich x über mehrere Objekte, die sich in diesem Abstandsbereich befinden und innerhalb eines Zeitfensters ermittelt wurden, gilt:

$$\overline{C}(x) = \frac{1}{n}\sum_{i=1}^{n} C_i(x) \tag{3}$$

Mit (1) und (2) gilt für die Berechnung des Durchschnittskontrastes $\overline{C}(x)$ nach (3):

$$\overline{C}(x) = \overline{c}\, e^{-\frac{x}{D}} \tag{4}$$

Der Durchschnittskontrast $\overline{C}(x)$ folgt damit dem selben Exponentialgesetz wie der beobachtbare Kontrast $C_i(x)$ eines einzelnen Objektes i.

Liegen Messungen des Durchschnittskontrastes für zwei Abstandsbereiche $x_1$ und $x_2$ vor, dann ergibt sich die Sichtweite zu:

$$D = \frac{x_2 - x_1}{\ln\overline{C}(x_1) - \ln\overline{C}(x_2)} \tag{5}$$

Je länger der Zeitraum ist, über den der Durchschnittskontrast für einen bestimmten Abstandsbereich gemessen wird und je mehr Objekte in der Szene vorhanden sind, desto kleiner ist der Meßfehler bei der Sichtweitenbestimmung.

Figur 2 zeigt schematisiert ein Ablaufdiagramm zur Durchführung des Verfahrens. Die Bildsensorsignale 21 und 22 der Signalleitungen 13 und 14 werden den Vorverarbeitungsmodulen 23 und 24 zugeführt.

Im Modul 25 wird eine Abstands- und Kontrastmessung durchgeführt. Dort werden im ersten Schritt Objekte, die sich vollständig im Sichtbereich beider Bildsensoren befinden, mit Verfahren der Bildverarbeitung durch Bildsegmentierung erkannt. Im zweiten Schritt wird der Abstand des Objektes zum Bildsensorsystem ermittelt. Eine besonders geeignete Möglichkeit zur Abstandsmessung sind blockbasierte Stereoverfahren. Hier wird der Abstand der Objekte über die Korrelation von Bildblöcken entlang der Epipolaren in beiden Bildern gemessen. Aus der relativen Verschiebung der Bildblöcke in beiden Bildern kann der Abstand des Objektes vom Bildsensorsystem berechnet werden, da der Abstand umgekehrt proportional zur Verschiebung der Bildblöcke ist.

Anschließend wird in Schritt drei der Kontrast der Objekte ermittelt. In dem bevorzugten Ausführungsbeispiel wird der Kontrast über das Betragsintegral eines Kantenfilters über dem Bildblock berechnet. Denkbar sind andere bekannte Verfahren aus der Bildverarbeitung zur Berechnung des Kontrastes über einem Bildausschnitt, wie die Berechnung der Standardabweichung und der Varianz der Grauwerte innerhalb eines Bildblockes.

Das Verfahren ordnet jedem ermittelten Kontrastwert einen Abstandswert zu. Diese so erhaltenen Wertepaare werden als Objektkenndaten an das nachfolgende Modul 26 zur Weiterverarbeitung geleitet.

In Modul 26 erfolgt die Berechnung des Durchschnittskontrastes in jedem Abstandsbereich. Dazu wird der Abstand in Abstandbereiche eingeteilt. Die Abstandsbereiche sind im bevorzugten Ausführungsbeispiel durch die gleiche Breite $\Delta x$ charakterisiert. In einem abgeänderten Verfahren ist es möglich, die Breite der Abstandsbereiche in Abhängigkeit verschiedener Parameter, wie beispielsweise Zeit, Abstand und/oder des Bewegungszustandes des Bildsensorsystems, anzupassen. Die in Modul 25 ermittelten Objektkenndaten werden den Abstandsbereichen zugeordnet. Die Klassifizierung wird aufgrund des Parameters Abstand durchgeführt. Innerhalb jedes Abstandbereiches wird der Durchschnittskontrast durch Mittelwertbildung entsprechend der Formel (3) berechnet. Die Bildung des Durchschnittskontrastes basiert auf Objektkenndaten, die innerhalb eines Zeitfensters vor dem Berechnungszeitpunkt ermittelt wurden. Das Zeitfenster ist so zu wählen, dass sich die Sichtweite innerhalb des Fensters nicht wesentlich ändert. Die Durchschnittskontraste jedes Abstandsbereiches werden an das nachfolgende Modul 27 zur Berechnung der Sichtweite geleitet. Zur Berechnung der Sichtweite sind zwei Berechnungvarianten möglich. Einer ersten Variante zufolge wird die Sichtweite durch arithmetische Mittelwertbildung von wenigstens einer Einzelsichtweite gebildet. Die Einzelsichtweiten, beispielsweise $D(x_3, x_4)$, werden aus Durchschnittskontrastwerten von jeweils zwei unterschiedlichen Abständen, hier $x_3$ und $x_4$, nach Formel (5) gebildet.

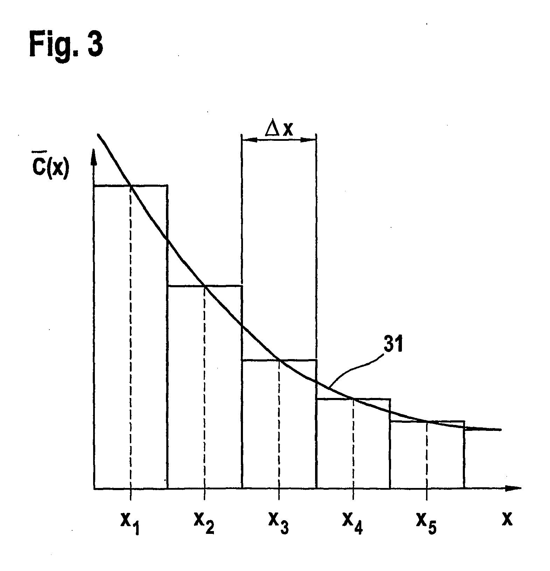

Einer zweiten Variante zufolge kann die Sichtweite über eine exponentielle Regression, in Figur 3 als Regressionskurve 31 eingezeichnet, berechnet werden.

Das Ausgangssignal 28, das ein Maß für die Sichtweite ist, wird über die Signalleitung 16 in Figur 1 an das nachfolgende Systemen 17 geleitet.

Figur 3 zeigt den Durchschnittskontrast $\overline{C}(x)$ von Objekten im gleichen Abstandsbereich als Funktion des Abstandes x. Die Breite eines Abstandsbereichs Δx ist eingezeichnet.

In Situationen, in denen sich nur Objekte ähnlicher Größe im Sichtfeld der Bildsensoren befinden, könnte die Abschwächung der kleinräumigen Kontraste weit entfernter Objekte durch die optischen Eigenschaften der Bildsensoren zu einer Unterschätzung der Sichtweite führen. Durch eine Vorverarbeitung der Bildsensorsignale in den vorverarbeitungsmodule 23 und 24, insbesondere durch eine Hochpaßfilterung, läßt sich dies verhindern. Alternativ ist es möglich, durch .entsprechende Anpassung der exponentiellen Regressionskurve, diesen Fehler zu reduzieren. Die Vorverarbeitungsmodule 23 und 24 können daneben beispielsweise zu einer Verbesserung der Bildqualität, zur Beseitigung von Störungen, zur Kontrastverbesserung und/oder zur Kantenverschärfung eingesetzt werden.

Die ermittelte Sichtweite wird in geeigneter Weise an wenigstens ein nachfolgendes System 17 weiterleitet. Denkbar ist beispielsweise eine Anpassung wenigstens eines Systems aufgrund der Sichtweite und/oder eine Abschaltung oder Einschaltung wenigstens eines Systems beim Verlassen eines einstellbaren Wertebereiches der Sichtweite. Eine Anwendungsmöglichkeit ergibt sich in Fahrerassistenzsystemen in Kraftfahrzeugen. Hier ist beispielsweise eine optische, akustische und/oder haptische Warnung des Fahrers bei Überschreitung einer aus den Sichtverhältnissen abgeleiteten maximalen Geschwindigkeit denkbar. Insbesondere ist das Verfahren geeignet, bei Unterschreitung einer minimalen Sichtweite die Nebelscheinwerfer und/oder das Abblendlicht in Kraftfahrzeugen einzuschalten. Vorzugsweise kann das Verfahren zur Abschaltung eines auf einem Bildsensorsystem basierenden Abstandswarnsystem in Kraftfahrzeugen bei Unterschreitung einer minimalen Sichtweite verwendet werden.

Das beschriebene Verfahren und die Vorrichtung sind nicht auf die Anwendung von Bildsensorsystemen, die aus zwei Bildsensoren bestehen, im Kraftfahrzeug eingeschränkt. Bei Systemen mit mehr als zwei Kameras kann die Sichtweite aus jeweils zwei Bildsensorsignalen gebildet werden. Durch Verwendung von statistischen Verfahren kann der Meßfehler der berechneten Sichtweite verkleinert werden. Voraussetzung ist lediglich, dass die verwendeten Bildsensoren dieselbe Szene aufnehmen. Ferner kann die beschriebene vorgehensweise mit den entsprechenden Merkmalen außerhalb der Kraftfahrzeugtechnik eingesetzt werden. Als Anwendungsbeispiel ist der Einsatz in Bildsensorsystemen zur Überwachung von Verkehrsräumen denkbar. Beispielsweise läßt sich das Verfahren zur automatischen Anpassung der Anzeige der erlaubten Höchstgeschwindigkeit an die Sichtverhältnisse einsetzen und/oder zum Aufbau eines Nebelwarnsystems für Verkehrsteilnehmer verwenden.

**Patentansprüche**

1. Verfahren zur Sichtweitenmessung mit Bildsensorsystemen, wobei

- aus den Bildsensorsignalen eine Größe ermittelt wird, welche den Kontrast des aufgenommenen Bildes oder eines Bildausschnittes repräsentiert,
- das Bildsensorsystem aus wenigstens zwei Bildsensoren (11, 12) besteht, die im wesentlichen dieselbe Szene aufnehmen,
- ferner aus den Bildsensorsignalen eine Größe ermittelt wird, welche den Abstand zu einem aufgenommenen Objekt im Bild bzw. Bildausschnitt repräsentiert,
- und abhängig von den ermittelten Größen die Sichtweite D bestimmt wird.

**dadurch gekennzeichnet, dass** die Sichtweite D in Abhängigkeit von Durchschnittskontrasten $\overline{C}(x)$ von wenigstens zwei Abstandsbereiche $x_1$ und $x_2$ gemäß

$$D = \frac{x_2 - x_1}{\ln \overline{C}(x_1) - \ln \overline{C}(x_2)}$$

berechnet wird, wobei der Durchschnittskontrast $\overline{C}(x)$ aus Kontrasten von mehreren Objekten, die sich in einem Abstandsbereich $x_1$, bzw. $x_2$ befinden, gebildet wird.

2. Verfahren nach Anspruch 1, **dadurch gekennzeichnet, dass** das Bildsensorsystem aus zwei Bildsensoren besteht.

3. Verfahren nach einem der vorhergehenden Ansprüchen, **gekennzeichnet durch** die Schritte:

- Erkennung von Objekten im Bildbereich von zwei Bildsensoren,
- Bestimmung des Abstandes der erkannten Objekte zum Bildsensorsystem,
- Ermittlung des Kontrastes der erkannten Objekte,
- Verarbeitung der ermittelten Objektkenndaten Abstand und Kontrast,
- Berechnung der Sichtweite basierend auf den Objektkenndaten.

4. Verfahren nach Anspruch 3, **dadurch gekennzeichnet, dass** die Verarbeitung der ermittelten Objektkenndaten durch die nachfolgenden Schritte erfolgt:

- Zuordnung des Abstandes und des Kontrastes eines Objektes zu einem Wertepaar,
- Klassifizierung der Wertepaare der Objekte aufgrund des Abstandes und Einteilung in Abstandsbereiche,
- Berechnung des Durchschnittskontrastes in jedem Abstandsbereich.

5. Verfahren nach Anspruch 4, **dadurch gekennzeichnet, dass** die Breite des Abstandsbereiches in jedem Abstandsbereich gleich ist.

6. Verfahren nach Anspruch 4, **dadurch gekennzeichnet, dass** die Breite wenigstens eines Abstandsbereiches in Abhängigkeit der Zeit, des Abstandes und/oder des Bewegungszustandes des Bildsensorsystems angepasst wird.

7. Verfahren nach einem der vorhergehenden Ansprüchen, **dadurch gekennzeichnet, dass** aus der relativen Verschiebung von zwei korrespondierenden Blöcken eines Objektes in den sich zeitlich entsprechenden Bildern der zwei Bildsensoren, der Abstand berechnet wird.

8. Verfahren nach einem der vorhergehenden Ansprüchen, **dadurch gekennzeichnet, dass** der Kontrast eines Objektes im Bild bzw. Bildausschnitt durch das Betragsintegral eines Kantenfilters über einem ausgewählten Ausschnitt des Bildes eines oder beider Bilder der zwei Bildsensoren gebildet wird.

9. Verfahren nach Anspruch 3, **dadurch gekennzeichnet, dass** aus Durchschnittskontrastwerten von jeweils zwei unterschiedlichen Abstandsbereichen zu wenigsten einem Abstandsbereich wenigstens eine Einzelsichtweite berechnet wird.

10. Verfahren nach Anspruch 9, **dadurch gekennzeichnet, dass** die Sichtweite durch anschließende arithmetische Mittelwertbildung von wenigstens einer Einzelsichtweite gebildet wird.

11. Verfahren nach Anspruch 3, **dadurch gekennzeichnet, dass** die Sichtweite durch eine exponentielle Regression der Durchschnittskontraste über dem Abstand berechnet wird.

12. Verfahren nach einem der vorhergehenden Ansprüche, **dadurch gekennzeichnet, dass** die Bildsensorsignale vorverarbeitet werden.

13. Verfahren nach einem der vorhergehenden Ansprüche, **dadurch gekennzeichnet, dass** die aus den Bildsensorsignalen berechnete Sichtweite zur Anpassung wenigstens eines nachfolgenden Systems verwendet wird und/oder bei Verlassen eines einstellbaren Wertebereiches der Sichtweite eine Abschaltung oder Einschaltung wenigstens eines Systems herbeigeführt wird.

14. Verfahren nach einem der vorhergehenden Ansprüchen, **dadurch gekennzeichnet, dass** sich die Bildsensorsysteme in Kraftfahrzeugen befinden.

15. Vorrichtung zur Messung der Sichtweite D mit Bildsensorsystemen mit wenigstens zwei Bildsensoren (11, 12), die im wesentlichen dieselbe Szene aufnehmen, wobei eine Auswerteeinheit (15) aus wenigstens zwei Bildsensorsignalen die Sichtweite D berechnet und ein Ausgangssignal als Meßwert erzeugt, das ein Maß für die Sichtweite D ist, **dadurch gekennzeichnet, dass** die Auswerteeinheit (15) ein Modul (27) aufweist, wobei an das Modul (27) Durchschnittskontraste $\overline{C}(x)$ von wenigstens zwei Abstandsbereichen $x_1$, und $x_2$ zur Berechnung der Sichtweite D geleitet werden, wobei der Durchschnittskontrast $\overline{C}(x)$ aus Kontrasten von mehreren Objekten, die sich in einem

Abstandsbereich $x_1$ bzw. $x_2$ befinden, gebildet wird, wobei die Sichtweite D gemäß

$$D = \frac{x_2 - x_1}{\ln \overline{C}(x_1) - \ln \overline{C}(x_2)} \cdot$$

berechnet wird.

16. Vorrichtung nach einem der vorhergehenden Ansprüchen, **dadurch gekennzeichnet, dass** das Bildsensorsystem im Kraftfahrzeug ist.

**Claims**

1. Method for visual range measurement with the aid of image sensor systems, in which

   - a variable which represents the contrast of the recorded image or of an image section is established from the image sensor signals,
   - the image sensor system consists of at least two image sensors (11, 12) which record substantially the same scene,
   - furthermore a variable which represents the distance from a recorded object in the image or the image section is established from the image sensor signals,
   - and the visual range D is determined from the established variables,

   **characterized in that** the visual range D is calculated as a function of average contrasts $\overline{C}(x)$ of at least two distance ranges $x_1$ and $x_2$ in accordance with

   $$D = \frac{x_2 - x_1}{\ln \overline{C}(x_1) - \ln \overline{C}(x_2)} \quad ,$$

   the average contrast $\overline{C}(x)$ being formed from contrasts of a number of objects which are located in a distance range $x_1$ and $x_2$, respectively.

2. Method according to Claim 1, **characterized in that** the image sensor system consists of two image sensors.

3. Method according to one of the preceding claims, **characterized by** the steps of:

   - detecting objects in the image range of two image sensors,
   - determining the distance of the detected object from the image sensor system,
   - establishing the contrast of the detected objects,
   - processing the established object characteristic data of distance and contrast, and
   - calculating the visual range on the basis of the object characteristic data.

4. Method according to Claim 3, **characterized in that** the processing of the established object characteristic data is performed by means of the following steps:

   - assigning the distance and the contrast of an object to a value pair,
   - classifying the value pairs of the objects on the basis of the distance and subdivision into distance ranges, and
   - calculating the average contrast in each distance range.

5. Method according to Claim 4, **characterized in that** the width of the distance range is the same in each distance range.

6. Method according to Claim 4, **characterized in that** the width of at least one distance range is adapted as a function of the time, the distance and/or the movement state of the image sensor system.

7. Method according to one of the preceding claims, **characterized in that** the distance is calculated from the relative displacement of two corresponding blocks of an object in the temporally corresponding images in the two image sensors.

8. Method according to one of the preceding claims, **characterized in that** the contrast of an object in the image or the image section is formed by the magnitude integral of an edge filter over a selected section of the image of one or both images of the two image sensors.

9. Method according to Claim 3, **characterized in that** at least one individual visual range is calculated from average contrast values of in each case two different distance ranges in relation to at least one distance range.

10. Method according to Claim 9, **characterized in that** the visual range is formed by subsequent arithmetical averaging of at least one individual visual range.

11. Method according to Claim 3, **characterized in that** the visual range is calculated by an exponential regression of the average contrasts over the distance.

12. Method according to one of the preceding claims, **characterized in that** the image sensor signals are preprocessed.

13. Method according to one of the preceding claims, **characterized in that** the visual range calculated from the image sensor signals is used to adapt at least one downstream system, and/or at least one system is caused to be switched off or switched on when an adjustable value range of the visual range is exited.

14. Method according to one of the preceding claims, **characterized in that** the image sensor systems are located in motor vehicles.

15. Device for measuring the visual range D with the aid of image sensor systems with at least two image sensors (11, 12) that record substantially the same scene, an evaluation unit (15) calculating the visual range D from at least two image sensor signals and generating an output signal as measured value which is a measure of the visual range D, **characterized in that** the evaluation unit (15) has a module (27), average contrasts $\overline{C}(x)$ of at least two distance ranges $x_1$ and $x_2$ being derived at the module (27) for calculating the visual range D, the average contrast $\overline{C}(x)$ being formed from contrasts of a number of objects which are located in a distance range $x_1$ and $x_2$, respectively, the visual range D being calculated in accordance with

$$D = \frac{x_2 - x_1}{1n\overline{C}(x_1) - 1n\overline{C}(x_2)} \quad .$$

16. Device according to one of the preceding claims, **characterized in that** the image sensor system is in the motor vehicle.

**Revendications**

1. Procédé de mesure de la distance de visibilité à l'aide de systèmes de capteurs d'images selon lequel

   - on détermine une grandeur à partir des signaux de capteur d'images, représentant le contraste de l'image prise ou d'un extrait de l'image,
   - le système de capteurs d'images se compose d'au moins deux capteurs d'images (11, 12) qui prennent pratiquement la même scène,
   - en outre, à partir des signaux de capteurs d'images, on détermine une grandeur représentant la distance par rapport à l'objet de la prise de vues ou de l'extrait de l'image prise, et, en fonction des grandeurs déterminées, on définit la distance de visibilité (D),

   **caractérisé en ce qu'**
   on calcule la distance de visibilité (D) en fonction des contrastes moyens $\overline{C}(x)$ pour au moins deux plages de distances $x_1$ et $x_2$ selon la formule suivante :

$$D = \frac{x2 - x1}{\ln\overline{C}(x1) - \ln\overline{C}(x2)}$$

le contraste moyen $\overline{C}(x)$ étant obtenu à partir des contrastes de plusieurs objets qui se trouvent dans une plage de distances $x_1$ ou $x_2$.

**2.** Procédé selon la revendication 1,
**caractérisé en ce que**
le système de capteurs d'images se compose de deux capteurs d'images.

**3.** Procédé selon l'une des revendications précédentes,
**caractérisé par**
les étapes suivantes :

- reconnaissance d'objets dans la zone d'image de deux capteurs d'images,
- détermination de la distance des objets reconnus par rapport au système de capteurs d'images,
- détermination du contraste des objets reconnus,
- détermination des données caractéristiques des objets, à savoir la distance et le contraste,
- calcul de la distance de visibilité en fonction des données caractéristiques des objets.

**4.** Procédé selon la revendication 3,
**caractérisé en ce que**
le traitement des données caractéristiques d'objets, déterminés, se fait selon les étapes suivantes :

- association de la distance et du contraste d'un objet, à une paire de valeurs,
- classification des paires de valeurs des objets en fonction de la distance et de la répartition des plages de distances,
- calcul du contraste moyen dans chaque plage de distances.

**5.** Procédé selon la revendication 4,
**caractérisé en ce que**
la largeur de la plage de distances est la même dans chaque plage de distances.

**6.** Procédé selon la revendication 4,
**caractérisé en ce que**
la largeur d'au moins une plage de distances est adaptée en fonction du temps, de la distance et/ou de l'état de mouvement du système de capteurs d'images.

**7.** Procédé selon l'une des revendications précédentes,
**caractérisé en ce qu'**
on calcule la distance à partir du décalage relatif de deux blocs correspondants d'un objet dans les images qui se correspondent dans le temps pour deux capteurs d'images.

**8.** Procédé selon l'une des revendications précédentes,
**caractérisé en ce que**
l'on forme le contraste d'un objet dans l'image ou dans l'extrait d'image par l'intégrale de l'amplitude à l'aide d'un filtre à arêtes sur un segment sélectionné de l'image ou des deux images fournies par deux capteurs d'images.

**9.** Procédé selon la revendication 3,
**caractérisé en ce qu'**
à partir des valeurs moyennes de contraste de chaque fois deux plages de distances, différentes par rapport à au moins une plage de distances, on calcule au moins une distance de visibilité individuelle.

**10.** Procédé selon la revendication 9,
**caractérisé en ce que**
l'on forme la distance de visibilité en formant la valeur moyenne arithmétique consécutive d'au moins une distance de visibilité seule.

**11.** Procédé selon la revendication 3,
**caractérisé en ce que**
l'on calcule la distance de visibilité par une régression exponentielle des contrastes moyens en fonction de la distance.

**12.** Procédé selon l'une des revendications précédentes,
**caractérisé en ce qu'**
on prépare les signaux de capteur d'images.

**13.** Procédé selon l'une des revendications précédentes,
**caractérisé en ce que**
l'on utilise la distance de visibilité calculée à partir des signaux de capteur d'images pour adapter au moins un système suivant et/ou en quittant une plage de valeurs réglées de la distance de visibilité, on coupe ou on branche au moins un système.

**14.** Procédé selon l'une des revendications précédentes,
**caractérisé en ce que**
les systèmes de capteurs d'images équipent un véhicule automobile.

**15.** Dispositif de mesure de la distance de visibilité (D) à l'aide de système de capteurs d'images comportant au moins deux capteurs d'images (11, 12) qui prennent pratiquement la même scène, une unité d'exploitation (15) calculant la distance de visibilité (D) à partir d'au moins deux signaux de capteurs d'images et générant un signal de sortie comme valeur de mesure, ce signal étant une mesure de la distance de visibilité (D),
**caractérisé en ce que**
l'unité d'exploitation (15) comporte un module (27),
le module (27) recevant les contrastes moyens $\overline{C}(x)$ d'au moins deux plages de distances $x_1$ et $x_2$ pour calculer la distance de visibilité (D),
le contraste moyen $\overline{C}(x)$ étant formé à partir des contrastes de plusieurs objets se trouvant dans une plage de distances x1 ou x2,
la distance de visibilité (D) se calculant selon la formule :

$$D = \frac{x2 - x1}{\ln\overline{C}(x1) - \ln\overline{C}(x2)}$$

**16.** Dispositif selon l'une des revendications précédentes,
**caractérisé en ce que**
le système de capteurs d'images équipe un véhicule automobile.

Fig. 1

Fig. 2

$$x = ?$$
$$C_i(x) = ?$$

$$\overline{C}(x) = ?$$

$$D = ?$$

# Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0206851 A1
- EP 687594 A1
- DE 19928915 A1
- JP 631887741 B

**In der Beschreibung aufgeführte Nicht-Patentliteratur**

- Visibility estimation from a moving vehicle using the RALPH vision system. *Intelligent Transportation System,* 09. November 1997